# EUROPÄISCHE PATENTSCHRIFT

(11) **EP 1 724 199 B1**
(45) Veröffentlichungstag und Bekanntmachung des Hinweises auf die Patenterteilung: **10.12.2008**
(21) Anmeldenummer: 05018183.3
(22) Anmeldetag: 22.08.2005
(51) Int. Cl.: B65D 27/06, B65D 85/57

(54) **Umschlag für den Versand auf mindestens zwei Postwegen**
Re-usable postal envelope
Enveloppe postale réutilisable

(30) Priorität: 18.05.2005 DE 202005007765 U
(43) Veröffentlichungstag der Anmeldung: 22.11.2006
(73) Patentinhaber: Amazon Europe Holding Technologies SCS, 1331 Luxembourg (LU)
(72) Erfinder: Taute, Hans-Georg, 36251 Bad Hersfeld (DE)
(74) Vertreter: Grünecker, Kinkeldey, Stockmair & Schwanhäusser Anwaltssozietät

(56) Entgegenhaltungen:
- WO-A-96/11853
- GB-A- 191 514 153
- US-A- 5 251 810
- US-A- 5 516 040
- US-A- 5 713 511
- US-A1- 2002 023 948

## Beschreibung

### HINTERGRUND DER ERFINDUNG

### 1. Gebiet der Erfindung

Die vorliegende Erfindung betrifft einen Umschlag für den postalischen Versand und insbesondere die Ausbildung eines Umschlags zum Versand auf mindestens zwei Postwegen.

### 2. Beschreibung des Stands der Technik

Mit der zunehmenden Verbreitung des Internets und der Verdrängung der herkömmlichen Videokassette durch die DVD hat sich im Internethandel das Geschäftsfeld der Online-Videotheken etabliert. Betreiber einer solchen Online-Videothek ("Verleiher") stellen meist ein Internetportal bereit, über das sie CDs oder DVDs leihweise anbieten. Die CDs oder DVDs werden in der Regel per Post an die Kunden versandt und später durch die Kunden wieder an den Verleiher zurückgesandt. Üblicherweise stellen die Verleiher dafür fertig adressierte und frankierte Rückumschläge bereit.

Aufgrund der hohen Kundentransparenz des Internets herrscht im Internethandel allgemein und speziell im Bereich der Online-Videotheken ein hoher Preisdruck. Zur Kostensenkung ist es daher von Vorteil, wenn die verwendeten Umschläge bzw. Versandeinheiten mit möglichst geringem Porto frankiert werden können und ihre Herstellung möglichst kostengünstig erfolgen kann. Als besonders geeignet hat sich dabei die Verwendung ein- und desselben Umschlags für den Hin- und Rückversand erwiesen.

Die DE 203 10 755 U1 schlägt dementsprechend einen Umschlag vor, wie er in Fig. 1 abgebildet ist. Dieser Umschlag ist aus einem blattartigen Zuschnitt mit einer Rückseite und daran anschließenden Seitenklappen 103L und 103R, Bodenklappe 102 und Verschlussklappe 107 gebildet. In den Bereichen 104L und 104R ist die Bodenklappe 102 flächig über die Seitenklappen 103L, 103R mit der Rückseite verklebt. Zwischen den Bereichen 104L und 104R entsteht so eine Tasche 105, in die die zu versendende CD oder DVD 114 aufgenommen werden kann.

Quer über die Verschlussklappe 107 verläuft eine Perforation 108, die die Verschlussklappe in eine obere Sektion 1070 und eine untere Sektion 107U teilt. Auf der Außenseite der oberen Sektion 1070 befindet sich ein Freimachungsaufdruck 112, und auf der Außenseite der unteren Sektion 107U ist die Hinsendeadresse 111 H für den Versand an den Kunden aufgedruckt. An den entsprechenden Stellen der Bodenklappe 102 befinden sich ein weiterer Freimachungsaufdruck 112 und die Rücksendeadresse 111 R des Verleihers.

Zum Versand an den Kunden wird die Verschlussklappe 107 entlang einer Faltlinie 106 umgelegt und mittels eines Klebestreifens 109U auf der Bodenklappe 102 befestigt. Zum Rückversand reißt der Kunde die untere Sektion 107U entlang der Perforation 108 von dem geöffneten Umschlag ab, biegt die obere Sektion 1070 erneut entlang der Faltlinie 106 in Richtung auf die Bodenklappe um und befestigt sie auf derselben mittels eines weiteren Klebestreifens 1090.

Sowohl beim Hin- als auch beim Rückversand wird durch die Deutsche Post üblicherweise ein Strichcode unterhalb des Adressfeldes 111 H bzw. 111 R auf den Umschlag aufgebracht. Es hat sich herausgestellt, dass es zu Verwirrungen und damit verbundenen unnötig langen Beförderungszeiten kommt, wenn die Verschlussklappe 107 so kurz ist, dass der Strichcode beim Versand auf dem Hinweg nicht mehr auf der Verschlussklappe 107, sondern auf der Bodenklappe 102 aufgedruckt wird. Er wird dann durch das Abtrennen der unteren Sektion 107U entlang der Perforation 108 nicht entfernt und bleibt auch beim Rückversand auf der Bodenklappe 102 sichtbar.

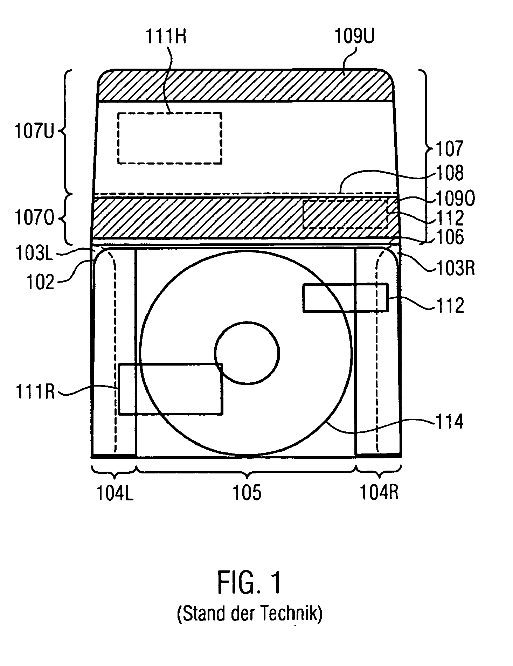

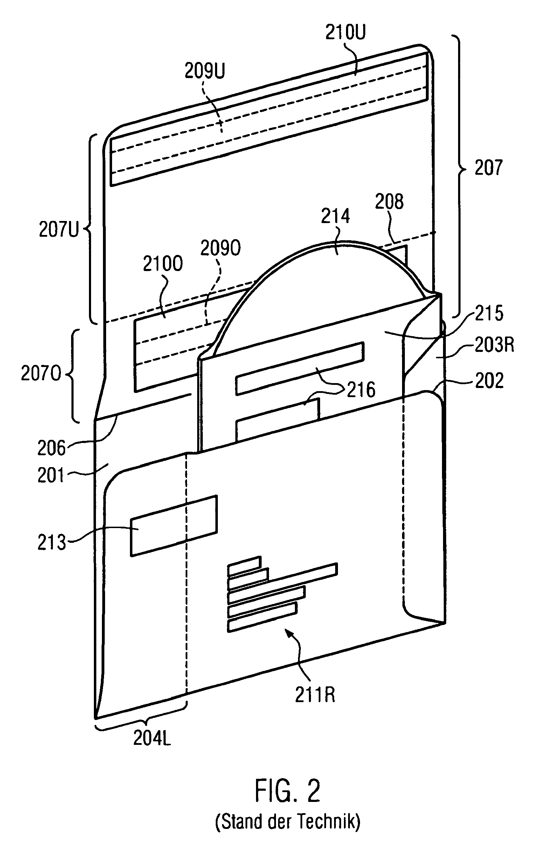

Um dem zu begegnen, wird in der DE 20 2004 010 844 U1 ein Umschlag vorgestellt, der in Fig. 2 abgebildet ist. Ähnlich wie der Umschlag der Fig. 1 ist auch dieser Umschlag aus einem blattartigen Zuschnitt mit einer Rückseite 201, einer Seitenklappe 203R, einer Bodenklappe 202 und einer Verschlussklappe 207 gebildet. Durch Verklebung der Bodenklappe 202 mit der Rückseite 201 in dem Bereich 204L sowie der Bodenklappe 202 mit der Seitenlasche 203R wird wieder eine Tasche 205 gebildet, in die die zu versendende CD oder DVD eingebracht werden kann.

Ebenfalls analog zu dem Umschlag der Fig. 1 ist die Verschlussklappe 207 durch eine Querperforation 208 in eine obere Sektion 2070 und eine untere Sektion 207U unterteilt, auf denen sich Klebestreifen 2090 und 209U befinden, die mit Abziehstreifen 2100, 210U abgedeckt sind. Die Höhe der Verschlussklappe 207 entspricht hier im Wesentlichen der Höhe der Rückseite 201, so dass bei geschlossenem Umschlag für den Hinversandweg nahezu die gesamte Bodenklappe 202 durch die Verschlussklappe 207 verdeckt wird. Der Strichcode der Deutschen Post wird dadurch beim Hinversand auf der unteren Sektion 207U der Verschlussklappe 207 aufgedruckt und beim Abtrennen der unteren Sektion 207U entlang der Perforation 208 mit entfernt. Es ist allerdings zu erwähnen, dass die Möglichkeit, dass sich die Verschlussklappe 107, 207 annähernd über die gesamte Höhe des Umschlages erstreckt, bereits in der obigen Druckschrift zur Fig. 1 erwähnt wurde.

Zum Versand in dem Umschlag der Fig. 2 wird die CD oder DVD 214 in eine Schutzhülle 215 eingebracht, welche dann in die Tasche 205 des Umschlags geschoben wird. Die Schutzhülle 215 wird auch zur Lagerung der CD oder DVD 214 beim Verleiher verwendet. Dies wird durch den Aufdruck von Informationen über die CD oder DVD in den Datenfeldern 216 auf der Schutzhülle 215 unterstützt.

Beide vorgestellten Umschläge der Fig. 1 und 2 haben den Nachteil, dass die Verschlussklappe 107, 207 perforiert werden muss. Dies erhöht die Herstellungskomplexität und folglich die Herstellungskosten. Daneben birgt die Perforation 108, 208 die Gefahr, zu leicht oder zu schwer abreißbar zu sein.

Im ersten Fall einer zu leicht abreißbaren Perforation 108, 208 könnte die untere Sektion 107U, 207U bereits beim Bedrucken oder Bestücken des Umschlags abgerissen werden. Der Umschlag müsste dann ersetzt werden, was die Abfertigungskosten erhöhen würde. Im zweiten Fall wäre es möglich, dass beim Versuch durch den Kunden, die untere Sektion 107U, 207U abzutrennen, die Verschlussklappe 107, 207 nicht sauber entlang der Perforation 108, 208 reißt. Teile der unteren Sektion 107U, 207U könnten dabei an der Verschlussklappe verbleiben, so dass für den Rückversand notwendige Aufdrucke 111 R, 112, 211 R, 213 verdeckt würden. Es könnten auch Teile der oberen Sektion 1070, 2070 mit abgerissen werden, wodurch der Umschlag nicht mehr vollständig verschließbar wäre. Im schlimmsten Fall wird der Umschlag für den Rückversand unbrauchbar.

Aus GB-A-14153 ist ein wiederverwendbarer Briefumschlag bekannt, bei dem sowohl eine Adresse für den ersten als auch für den zweiten Postweg vorgesehen ist. Bei der dort vorgeschlagenen Lösung befindet sich die Adresse für den Hinweg auf der Rückseite des Umschlags und die Adresse für den Rückweg befindet sich auf einer Lasche, die während des Hinwegs in den Umschlag eingesteckt ist. Der Empfänger des Briefes holt diese Lasche aus dem Inneren des Umschlages hervor und verklebt ihn durch den daraus entstehenden Verschluss, auf dessen Rückseite die Rückadresse aufgedruckt ist, und sendet den Brief zurück.

Aus US-A-5,713,511 ist in Zusammenhang mit den Figuren 16 bis 18 ein Briefumschlag bekannt, bei dem eine Verschlussklappe für den Posthinweg zweifach gefaltet ist, um dadurch ein Adressfeld für den Posthinweg in verschlossenem Zustand nicht zu überdecken. Für den Postrückweg wird die zweifache Faltung der Verschlussklappe rückgängig gemacht, wodurch die Verschlussklappe dann das Adressfeld für den Hinweg überdeckt. In diesem ungefalteten Zustand der Verschlussklappe wird ein auf Rückseite der Verschlussklappe angebrachtes Rücksendeadressfeld freigegeben, das in diesem Zustand die Adresse für die Rücksendung angibt.

Dementsprechend ist es die Aufgabe der vorliegenden Erfindung, einen Umschlag für den Versand auf mindestens zwei Postwegen bereitzustellen, der die Herstellungs- und Abfertigungskosten reduziert und die Nutzerfreundlichkeit erhöht.

Diese Aufgabe wird durch den Gegenstand des unabhängigen Anspruchs 1 gelöst. Bevorzugte Ausführungsformen sind Gegenstand der Unteransprüche.

Der beanspruchte Umschlag weist keine Perforation der Verschlussklappe mehr auf, wodurch der Herstellungsprozess vereinfacht und folglich die Herstellungskosten reduziert werden. Daneben werden die oben beschriebenen perforationsbedingten Probleme vermieden, wodurch auch die Abfertigungskosten gesenkt werden und der Umschlag benutzerfreundlicher wird. Ferner ist der beanspruchte Umschlag auch zur Lagerung des Versandinhalts, z.B. von CDs oder DVDs einer Online-Videothek, geeignet, wodurch die Gesamtabfertigungskosten weiter reduziert werden.

Ausgestaltungen sind durch die abhängigen Patentansprüche gegeben.

Durch die Unterteilung der Verschlussklappe etwa im Verhältnis 1 : 1 ist der Umschlag besonders einfach zum Hinversand vorzubereiten.

Der gleichzeitige Aufdruck eines Hinsendeadressfeldes auf der Bodenklappe und eines Rücksendeadressfeldes auf der zweiten Sektion beschleunigt den Versandabfertigungsprozess und erhöht die Nutzerfreundlichkeit weiter.

Ein Klebestreifen auf der zweiten Sektion, der den Umschlag für den Rückversand so verschließt, dass beide Sektionen der Verschlussklappe auf der Bodenklappe zu liegen kommen, ermöglicht eine einfache und sichere Vorbereitung des Umschlags zum Rückversand.

Durch die Wahl einer Verschlussklappenlänge, die nahezu die gesamte Höhe der Bodenklappe erreicht, wird das gleichzeitige Sichtbarsein der Strichcodes der Deutschen Post für den Hin- und Rückversand vermieden.

Ein Klebestreifen auf der zweiten Sektion, der die Verschlussklappe auf der Rückseite des Umschlags fixiert, ermöglicht eine einfache und sichere Verwendung des Umschlags zur Lagerung der CD oder DVD beim Verleiher.

Der Aufdruck eines Datenfeldes oder von Datenfeldern auf der Bodenklappe mit Informationen über den Umschlaginhalt vereinfacht die für die Lagerung notwendigen Vorgänge. Eine zusätzliche Schutz-/Lagerhülle für die CD oder DVD wird dadurch überflüssig.

### KURZE BESCHREIBUNG DER ZEICHNUNGEN

Nachfolgend werden Ausgestaltungen der vorliegenden Erfindung anhand der beigefügten Zeichnungen näher erläutert. Dabei zeigen:
- Fig. 1: einen aus dem Stand der Technik bekannten Umschlag;
- Fig. 2: einen weiteren aus dem Stand der Technik bekannten Umschlag;
- Fig. 3: den Umschlag gemäß einer Ausgestaltung im Ausgangszustand;
- Fig.4: die Vorbereitung des Umschlags der Ausgestaltung zum Bedrucken;
- Fig. 5: den fertig bedruckten Umschlag gemäß der Ausgestaltung;
- Fig. 6: die Vorbereitung des Umschlags der Ausgestaltung zum Versand;
- Fig. 7: den versandfertigen Umschlag nach der Ausgestaltung;
- Fig. 8: das Öffnen des Umschlags der Ausgestaltung durch den Versandempfänger;
- Fig. 9: die Vorbereitung des Umschlags nach der Ausgestaltung zum Rückversand;
- Fig. 10: den rückversandfertigen Umschlag gemäß der Ausgestaltung;
- Fig. 11: einen ersten Schritt des Öffnens des Umschlags der Ausgestaltung durch den Rückversandempfänger;
- Fig. 12: einen zweiten Schritt zum Öffnen des Umschlags gemäß der Ausgestaltung durch den Rückversandempfänger;
- Fig. 13: einen dritten Schritt zum Öffnen des ausgestaltungsgemäßen Umschlags durch den Rückversandempfänger;
- Fig. 14: den Umschlag gemäß einer weiteren Ausgestaltung im Ausgangszustand und
- Fig. 15: den für den Hinversand vorbereiteten Umschlag der weiteren Ausgestaltung.

### DETAILLIERTE BESCHREIBUNG DER ERFINDUNG

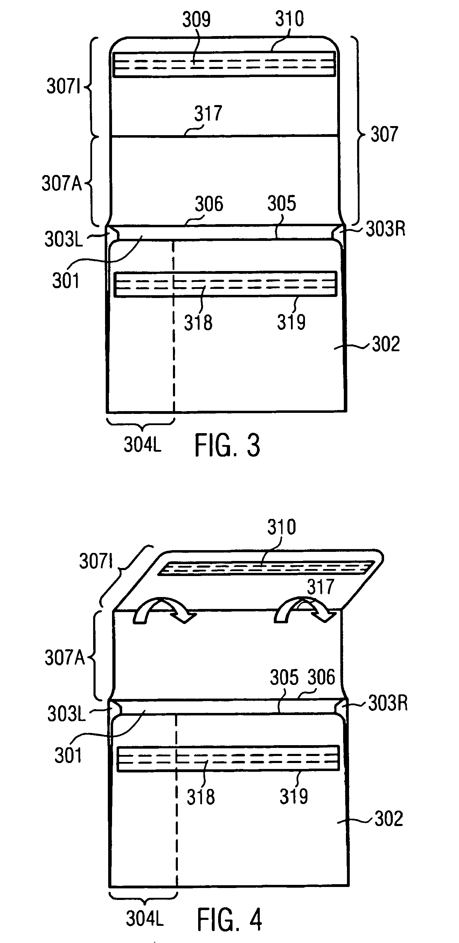

Der in der Fig. 3 gezeigte Umschlag nach einer Ausgestaltung ist aus einem blattartigen Zuschnitt gebildet, der durch Faltung und Verklebung zu dem Umschlag geformt wurde. Der Umschlag besteht im Wesentlichen aus einer rechteckigen Rückseite 301, an deren beiden kürzeren Seiten sich Seitenlaschen 303L und 303R und an deren längeren Seiten sich eine Bodenklappe 302 sowie eine Verschlussklappe 307 anschließen. Durch Umbiegen der Seitenlaschen 303L und 303R sowie der Bodenklappe 302 und Verkleben der Bodenklappe 302 mit den Seitenlaschen 303L und 303R wird eine Tasche 305 gebildet, in die ein oder mehrere Versandstücke aufgenommen werden können.

Im vorliegenden Beispiel wurde der Umschlag für den Versand von CDs oder DVDs einer Online-Videothek gestaltet. Um ein Hin- und Herrutschen solcher runden Versandstücke in dem Umschlag zu verhindern, wurde die Bodenklappe 302 zusätzlich in dem Bereich 304L flächig mit der Rückseite 301 verklebt. Die Maße der Rückseite 301 und der Verklebungsfläche 304L wurden so gewählt, dass die Tasche 305 annähernd quadratisch ausfällt und ihre Seitenlängen nur geringfügig größer sind als der Durchmesser der zu versendenden CD oder DVD. Diese kann sich somit mit nur noch geringem Spielraum in der Tasche 305 bewegen.

Dieser Effekt kann alternativ auch durch eine schmalere Wahl der Verklebungsfläche 304L und eine weitere Verklebung der Bodenklappe 302 mit der Rückseite 301 im Bereich der Seitenlasche 303R erreicht werden. In anderen Ausgestaltungen kann die Bodenklappe 302 mit der Rückseite 301 auch nicht flächig, sondern entlang einzelner Klebelinien verklebt werden. Weiterhin könnte auf eine oder beide der Seitenlaschen 303L, 303R verzichtet werden. Bei wieder anderen Ausgestaltungen, in denen der Umschlag z.B. zum Versand beliebiger anderer Versandstücke als CDs/DVDs verwendet wird, könnte die Verklebung der Bodenklappe 302 mit der Rückseite 301 auch entfallen. Durch eine Verklebung der Bodenklappe 302 nur mit den Seitenlaschen 303L und 303R würde eine Tasche 305 hergestellt, deren Ausmaße denen der Rückseite 301 entsprechen. Eine solche Ausgestaltung kann insbesondere dann verwendet werden, wenn nicht CDs oder DVDs, sondern beispielsweise Schriftstücke versandt werden sollen. Beliebige andere Ausbildungen der Tasche 305 sind ebenfalls möglich.

Im abgebildeten Beispiel wurden die Ausmaße der Rückseite 301 so angepasst, dass der Umschlag den Normvorgaben der Deutschen Post für einen Standardbrief entspricht, was zur Minimierung des notwendigen Portos beiträgt. Insbesondere ist hier die Rückseite 17 cm breit und 12,2 cm hoch. Die Verklebungsfläche 304L ist im vorliegenden Beispiel 4,5 cm breit, so dass die gebildete Tasche 305 12,5 cm breit und 12,2 cm hoch ist. Andere Abmessungen sind jedoch denkbar. Beispielsweise könnte der Umschlag den DIN C-, DIN B- oder DIN lang-Maßen entsprechen oder beliebige andere Ausmaße haben.

Durch die spezielle Ausgestaltung der Verschlusslasche 307 nach der vorliegenden Ausgestaltung wird die Verwendung des Umschlags zum Versand auf zwei Postwegen, d.h. nacheinander an zwei verschiedene Empfänger ermöglicht. Im Folgenden wird der Versand auf dem ersten Postweg als "Hinversand" oder kurz "Versand" und der Versand auf dem zweiten Postweg als "Rückversand" bezeichnet. Diese Bezeichnungen dienen nur der Vereinfachung und bedeuten nicht zwangsläufig, dass der Empfänger des zweiten Versandweges mit dem Absender des ersten Versandweges identisch sein muss.

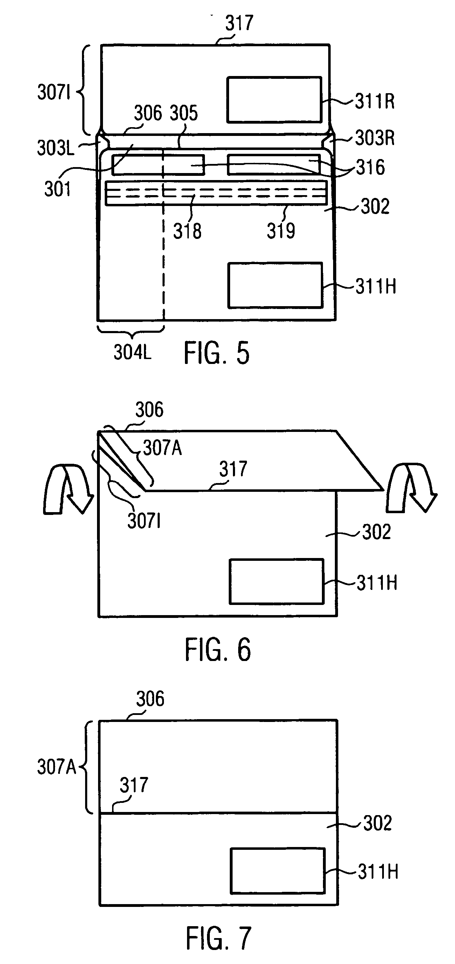

Wie aus Fig. 3 ersichtlich, ist die Verschlussklappe 307 in zwei Sektionen 3071 und 307A unterteilt. Die im Hinblick auf die Figuren 6 bis 8 als "äußere Sektion" bezeichnete Sektion 307A schließt dabei an eine am Übergang von der Rückseite 301 zur Verschlussklappe 307 befindliche Faltlinie 306 an. Die "innere Sektion" 3071 bezeichnet im Folgenden den übrigen Teil der Verschlussklappe 307.

Die beiden Sektionen 307A und 3071 sind durch eine weitere Faltlinie 317 voneinander getrennt. Die Faltlinie 317 teilt die Verschlussklappe 307 gemäß der dargestellten Ausgestaltung etwa im Verhältnis 1 : 1. Es sind jedoch auch andere Ausgestaltungen denkbar, in denen die beiden Sektionen 3071 und 307A unterschiedlich groß sind. Zweckmäßigerweise wird die innere Sektion 3071 geringfügig kleiner gewählt, als die äußere Sektion 307A.

Es ist anzumerken, dass die Verschlussklappe 307 in der vorliegenden Ausgestaltung weder entlang der Faltlinie 317 noch an anderer Stelle perforiert ist.

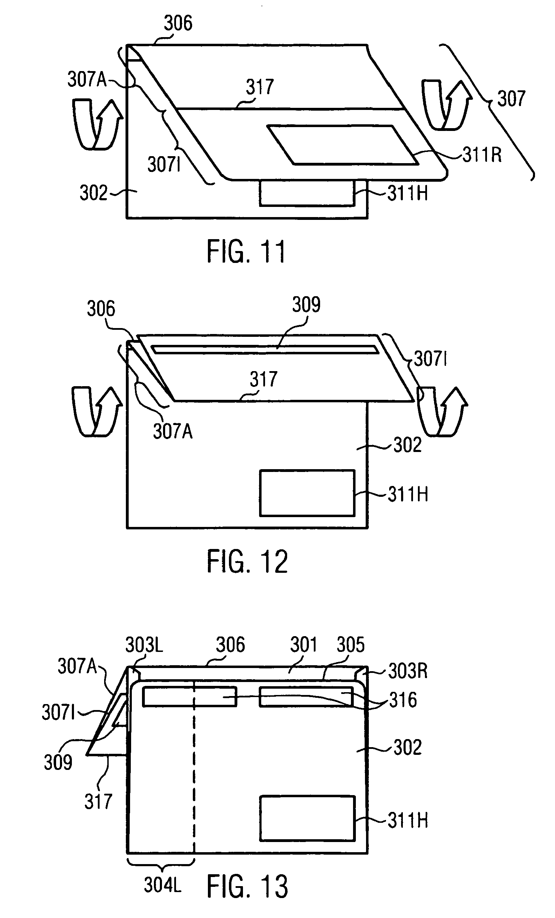

Zum Verschließen des Umschlags beim Rückversand befindet sich auf der inneren Sektion 3071 ein Klebestreifen 309 (erst in den Figuren 12 und 13 sichtbar), der von einem Abziehstreifen 310 abgedeckt wird. Ein weiterer Klebestreifen 318, der ebenfalls mit einem Abziehstreifen 319 bedeckt ist, befindet sich auf der Bodenklappe 302. Durch diesen Klebestreifen wird der Umschlag für den Hinversand verschlossen, wie mit Bezug auf die Fig. 6 und 7 erläutert werden wird.

Die Unterteilung der Verschlussklappe 307 ermöglicht, dass der Umschlag in einem einfachen Arbeitsgang mit allen sowohl für den Hin- als auch für den Rückversand notwendigen Daten bedruckt werden kann. Dazu wird, wie in Fig. 4 dargestellt, die innere Sektion 3071 in Richtung auf die Bodenklappe 302 entlang der Faltlinie 317 umgelegt. Gemäß der Ausgestaltung kommt dabei die Längskante der inneren Sektion 3071 in etwa auf der Faltlinie 306 zu liegen. In Fig. 5 ist der entsprechend gefaltete Umschlag der Ausgestaltung dargestellt.

Wie aus Fig. 5 ersichtlich, wurde der Umschlag gemäß der Ausgestaltung mit verschiedenen Aufdrucken 311 H, 311 R und 316 versehen. Insbesondere wurde auf der Bodenklappe 302 die Adresse 311 H für den Hinversand aufgedruckt. Die innere Sektion 3071 wurde mit der Adresse 311 R für den Rückversand bedruckt. Eines oder beide der Adressfelder 311 H und 311 R enthält dabei nicht nur die Adresse des entsprechenden Empfängers, sondern auch eine Postabrechnungszeile für die Freimachung nach den Vorschriften der Deutschen Post auf dem entsprechenden Versandweg.

Des Weiteren wurden gemäß der Ausgestaltung auf die Bodenklappe 302 Datenfelder 316 aufgedruckt, die Informationen über die zu versendende CD oder DVD enthalten. Dies kann z.B. der Titel der CD oder DVD, ihre Altersfreigabe oder weitere Information in Form eines Strichcodes sein. Ähnliche oder andere Informationen (nicht dargestellt) können auch an anderer Stelle, z. B. auf der inneren Sektion 3071 aufgedruckt sein.

Die Unterteilung und Faltung der Verschlussklappe 307 gemäß der vorliegenden Ausgestaltung ermöglicht es, alle Aufdrucke 311 H, 311 R und 316 in einem einzigen Arbeitsgang auf den Umschlag aufzubringen. Auf diese Weise wird eine schnelle und kostengünstige Versandabfertigung ermöglicht, ohne dass die Gefahr besteht, Teile des Umschlags, insbesondere der Verschlussklappe 307 zu beschädigen oder abzureißen.

Daneben wird es ermöglicht, die für den Versand notwendigen Daten wie Adressen und Freimachungsaufdrucke 311 H, 311 R an Stellen aufzubringen, die bei geschlossenem Umschlag den Normvorgaben der Deutschen Post für automationsfähige Briefsendungen genügen.

Beim Hinversand durch die Deutsche Post wird unterhalb des Hinsendeadressfeldes 311 H ein Strichcode aufgedruckt. Die Größe und Positionierung des Adressfeldes 311 H wird deshalb weiterhin so gewählt, dass durch den Aufdruck des Strichcodes durch die Deutsche Post weder die Lesbarkeit der in dem Adressfeld 311 H enthaltenen Informationen noch des Strichcodes beeinträchtigt wird. Die Positionierung des Rücksendeadressfeldes 311 R berücksichtigt dies analog.

Fig. 6 veranschaulicht die Vorbereitung des bedruckten Umschlags zum Versand. Dazu wird der Abziehstreifen 319 vom Klebestreifen 318 entfernt. Anschließend wird die bereits einmal gemäß der Fig. 4 gefaltete Verschlussklappe 307 wird dazu entlang der Faltlinie 306 in Richtung auf die Bodenklappe 302 umgelegt. Dabei kommt die innere Sektion 3071 auf der Bodenklappe 302 und die äußere Sektion 307A wiederum auf der inneren Sektion 3071 zu liegen.

Durch den Klebestreifen 318 wird die innere Sektion 3071 auf der Bodenklappe 302 fixiert, wodurch der Umschlag versiegelt wird. Nach der vorliegenden Ausgestaltung befindet sich der Klebestreifen etwas oberhalb der Mitte der Bodenklappe 302. Er fixiert so die innere Sektion 3071 in der Nähe der Faltlinie 317 und wird dennoch vollständig von der inneren Sektion 3071 überdeckt.. In anderen Ausgestaltungen kann der Klebestreifen 318 auch an anderer Stelle lokalisiert sein.

Gemäß der Ausgestaltung ist so für den Hinversand geschlossenen Zustand das auf der inneren Sektion 3071 befindliche Rücksendeadressfeld 311 R nicht mehr sichtbar. Auch die Informationsfelder 316 auf der Bodenklappe 302 werden nun von der Verschlussklappe 307 verdeckt. Das ebenfalls auf der Bodenklappe befindliche Hinsendeadressfeld 311 H dagegen bleibt für den Versand auf dem ersten Postweg sichtbar.

Dies ist auch in der Fig. 7, die den versandfertigen Umschlag der Ausgestaltung veranschaulicht, dargestellt. Beim Hinversand sind somit nur noch die äußere Sektion 307A und der Teil der Bodenklappe 302 sichtbar, auf der sich das Hinsendeadressfeld 311 H befindet, während die innere Sektion 3071 sowie der mit den Datenfeldern 316 bedruckte Teil der Bodenklappe 302 sowie der Klebestreifen 318 verdeckt bleiben.

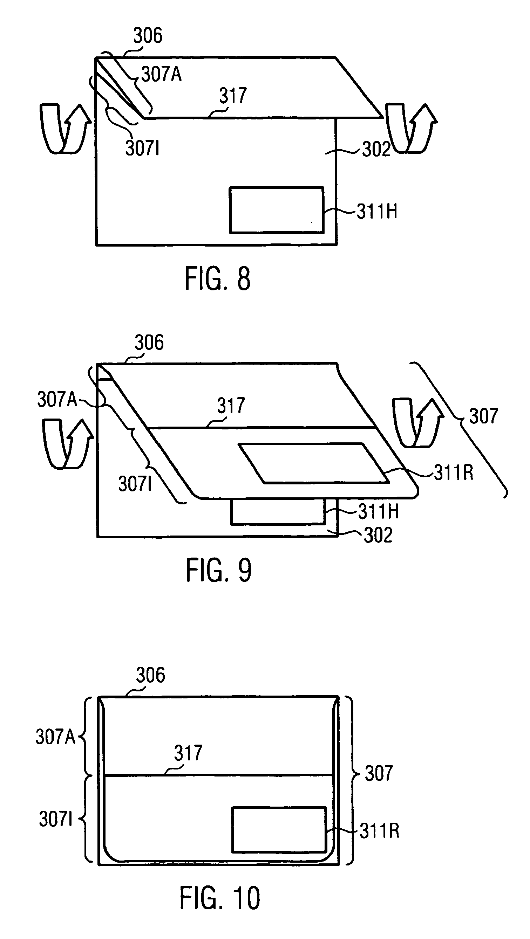

Fig. 8 veranschaulicht das Öffnen des Umschlags beim Empfänger des ersten Versandweges. In der in Fig. 8 dargestellten Situation wurde die Versiegelung durch den Klebestreifen 318 bereits geöffnet. Bei geeigneter Wahl des Klebemittels kann dies z.B. dadurch erfolgen, dass die Verschlussklappe 307 ausgehend von einem Ende der Faltlinie 317 von der Bodenklappe 302 abgezogen wird. Die Verschlussklappe 307 wird nun entlang der Faltlinie 306 weiter aufgeklappt, so dass die in der Tasche 305 befindlichen Versandstücke, z.B. CDs oder DVDs, aus dem Umschlag genommen werden können.

Soll der Umschlag zu einem späteren Zeitpunkt zum Versand auf dem zweiten Versandweg wiederverwendet werden, so wird er wie in Fig. 9 dargestellt verschlossen. Dabei wird die Verschlussklappe 307 wieder aufgeklappt, indem die innere Sektion 3071 entlang der Faltlinie 317 von der äußeren Sektion 307A weggebogen wird. Des Weiteren wird der Abziehstreifen 310 von dem auf der inneren Sektion 3071 befindlichen Klebestreifen 309 abgezogen, so dass die aufgeklappte Verschlussklappe 307 auf die Bodenklappe 302 geklebt werden kann.

Fig. 10 veranschaulicht das Ergebnis dieses Vorgangs. Die ausgeklappte Verschlussklappe 307 wurde entlang der Faltlinie 306 in Richtung auf die Bodenklappe 302 umgelegt und mittels des Klebestreifens 309 darauf befestigt. Der Umschlag ist dadurch wieder versandfertig verschlossen. Im Gegensatz zum Hinversand ist jetzt die auf der Bodenklappe 302 aufgedruckte Hinsendeadresse 311 H nicht mehr sichtbar. Sie wird durch die innere Sektion 3071 verdeckt. Stattdessen ist nun die innere Sektion 3071 mit der darauf aufgedruckten Rücksendeadresse 311 R sowie die äußere Sektion 307A sichtbar.

Gemäß der vorliegenden Ausgestaltung ist die Verschlussklappe 307 geringfügig kleiner als die Bodenklappe 302, so dass seitlich und unten Teile der Bodenklappe 302 sichtbar bleiben. Die Länge der Verschlussklappe 307 wurde so gewählt, dass der beim Hinversand durch die Deutsche Post aufgedruckte Strichcode vollständig verdeckt wird. Speziell ist die Verschlussklappe des vorliegenden Beispiels 12 cm lang und damit 2 mm kürzer als die 12,2 cm hohe Bodenklappe.

Der Umschlag gemäß der Ausgestaltung ist so gestaltet, dass er beim Adressaten des zweiten Versandweges, d.h. hier beim Verleiher, zur Aufbewahrung der darin befindlichen CD oder DVD weiterverwendet werden kann. Dazu wird der Umschlag, wie in den Fig. 11 bis 13 veranschaulicht, geöffnet.

Zunächst wird die Verschlussklappe 307 entlang der Faltlinie 306 wie in Fig. 11 dargestellt von der Bodenklappe 302 weggebogen. Dabei löst sich der Klebestreifen 309 von der Bodenklappe 302. Anschließend wird die innere Sektion 3071 entlang der Faltlinie 317 in der Richtung umgelegt, in der das Rücksendeadressfeld 311 R auf der äußeren Sektion 307 zu liegen kommt. Dies ist in Fig. 12 zu sehen.

Die so gefaltete Verschlussklappe 307 wird dann gemäß der Fig. 13 weiter entlang der Faltlinie 306 von der Bodenklappe 302 umgelegt, bis schließlich die innere Sektion 307 auf der Rückseite 301 zu liegen kommt. Der auf der inneren Sektion 3071 verbliebene Klebestreifen 309 fixiert dabei die Verschlussklappe 307 auf der Rückseite 301.

Auf diese Weise bildet der Umschlag nun eine oben offene Tasche, in der die DVD oder CD aufbewahrt werden kann. Da die Verschlussklappe 307 auf der Rückseite 301 fixiert ist, kann die CD oder DVD leicht und schnell, insbesondere auch maschinell, aus dem Umschlag entnommen werden. Dabei, sowie beispielsweise auch beim Einsortieren des Umschlags mit der CD oder DVD für die Lagerung, stören keine losen Teile, insbesondere nicht die Verschlussklappe 307, da sie fest mit der Rückseite 301 verbunden ist. Ferner sind jetzt auch die Informationsaufdrucke 316 wieder sichtbar, so dass die darin enthaltenen Angaben über die CD oder DVD zur Einsortierung verwendet werden können. Auf diese Weise wird eine zusätzliche Schutz- oder Lagerhülle für die CD oder DVD überflüssig, da der Umschlag selbst zur Lagerung beim Verleiher eingesetzt werden kann.

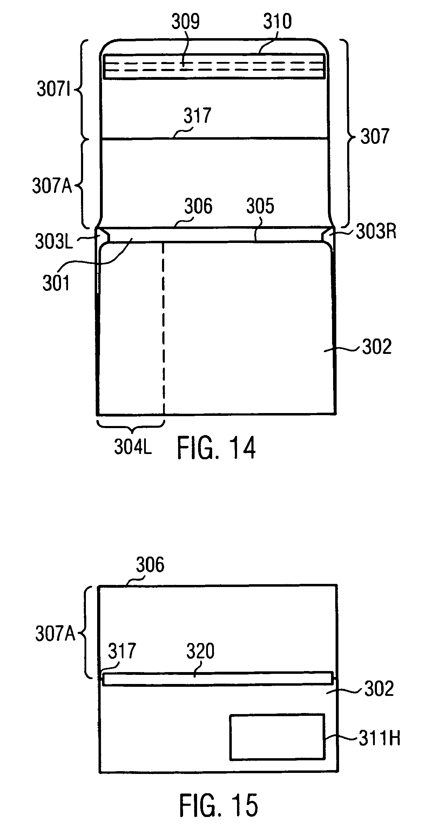

Fig. 14 zeigt den Ausgangszustand des Umschlags nach einer alternativen Ausgestaltung. Im Gegensatz zu dem in Fig. 3 dargestellten Beispiel befindet sich hier der Klebestreifen zum Verschließen des Umschlags auf dem Hinversandweg nicht auf der Bodenklappe 302. Stattdessen wird der Umschlag hierzu wie in Fig. 15 zu sehen mit einem Klebeband 320 verschlossen, das entlang der Faltlinie 317 über die äußere Sektion 307A und die Bodenklappe 302 verläuft. Der Umschlag ist dabei wie mit Bezug auf die Fig. 4 bis 7 erläutert gefaltet und bedruckt.

## Patentansprüche

1. Umschlag für den Versand auf mindestens zwei Postwegen, der aus einem blattartigen Zuschnitt mit einer Rückseite (301), mindestens einer sich an die Rückseite anschließenden Seitenlasche (303L, 303R), einer sich an die Rückseite anschließenden Bodenklappe (302) sowie einer sich an die Rückseite anschließenden Verschlussklappe (307) gebildet ist,
wobei sich am Übergang von der Rückseite zur Verschlussklappe eine erste Faltlinie (306) befindet,
wobei die Verschlussklappe durch eine parallel zur ersten Faltlinie verlaufende zweite Faltlinie (317) in eine erste Sektion (307A) und eine zweite Sektion (307I) unterteilt wird,
wobei sich die erste Sektion zwischen der ersten und zweiten Faltlinie befindet und
wobei der Umschlag auf der Aussenseite der Bodenklappe (302) einen ersten Klebestreifen (318) aufweist und auf der Innenseite der Verschlussklappe (307) im Bereich der zweiten Sektion einen zweiten Klebestreifen (309) aufweist,
wobei der Umschlag für den ersten Postweg so faltbar ist, dass die erste Sektion der Verschlussklappe über die zweite Faltlinie auf die zweite Sektion der Verschlussklappe faltbar ist und in diesem Zustand mit Hilfe des zweiten Klebestreifens (309) auf der ersten Sektion gehalten wird,
und die Verschlussklappe anschließend entlang der ersten Faltlinie auf die Bodenklappe (302) faltbar ist, wobei der erste Klebestreifen (318) so weit im oberen Bereich der Verschlussklappe (302) angebracht ist, dass er die über gefaltete Verschlussklappe mit der Bodenklappe verklebt,
und wobei im unteren Bereich der Bodenklappe ein Hinsendeadressfeld (311 H) vorgesehen ist, das in diesem Zustand sichtbar bleibt,
und wobei der Umschlag für den zweiten Postweg so faltbar ist, dass die Verschlussklappe (307) im Zustand ungefalteter erster und zweiter Sektionen über die erste Faltlinie auf die Bodenklappe faltbar ist, derart, dass sie in diesem Zustand das Hinsendeadressfeld (311 H) überdeckt und mittels des zweiten Klebestreifens (309) mit der Bodenklappe (302) verklebbar ist,
wobei auf der Außenseite der Verschlussklappe (307) im Bereich der zweiten Sektion ein Rücksendeadressfeld (311 R) vorhanden ist, das in diesem Zustand des für die Rücksendung verschlossenen Umschlages außen liegt und einsehbar ist.

2. Umschlag nach Anspruch 1, wobei die zweite Faltlinie die Verschlussklappe etwa im Verhältnis 1 : 1 unterteilt.

3. Umschlag nach Anspruch 1 oder 2, wobei sich die Verschlussklappe bei mittels des zweiten Klebestreifens verschlossenem Umschlag nahezu über die gesamte Höhe der Bodenklappe erstreckt.

4. Umschlag nach einem der Ansprüche 1 bis 3, weiterhin umfassend einen zweiten Klebestreifen (309) auf der zweiten Sektion, der die Verschlussklappe so auf dem geöffneten Umschlag fixiert, dass die erste Sektion auf der zweiten Sektion und die zweite Sektion auf der Rückseite zu liegen kommt.

5. Umschlag nach einem der Ansprüche 1 bis 4, wobei bei entlang der zweiten Faltlinie in Richtung auf die erste Sektion umgelegter zweiter Sektion zum gleichzeitigen Aufdruck weiterhin mindestens eine Fläche zum Aufdruck mindestens eines Datenfeldes (316) auf der Bodenklappe vorgesehen ist und wobei das Datenfeld Informationen über den zu versendenden Umschlaginhalt enthält.

## Claims

1. Envelope for mailing through the post at least twice, built from a foliaceous pre-cut blank comprising a back part (301), at least one side flap (303L, 303R) adjacent to the back part, a bottom flap (302) adjacent to the back part and a closing flap (307) adjacent to the back part,
wherein a first fold line (306) is located at the transition from the back part to the closing flap,
wherein the closing flap is divided into a first section (307A) and a second section (307I) by means of a second fold line running in parallel to the first fold line,
wherein the first section is located between the first and second fold lines,
wherein the envelope comprises a first adhesive strip (318) on the outer side of the bottom flap (302) and a second adhesive strip (309) in the area of the second section (307I) on the inner surface of the closing flap (307),
wherein the envelope for the first mailing can be folded in a manner that the first section of the closing flap is folded at the second fold line and lies upon the second section of the closing flap and is held in this position on the first section with the help of the second adhesive strip (309) and the closing flap can be folded afterwards at the first fold line of the bottom flap, wherein the first adhesive strip (318) is located as far in the upper area of the closing flap as to adhere the folded closing flap to the bottom flap, and wherein the lower area of the bottom flap is provided with an address field for first mailing (311H), which remains visible in this condition,
and wherein the envelope for the second mailing can be folded in a manner that when the first and second sections are not folded, the closing flap (307) can be folded at the first fold line at the bottom flap in a way that it covers the address field for first mailing (311 H) and can be adhered to the bottom flap (302) with the help of a second adhesive strip (309),
wherein the outer surface of the closing flap (307) is provided with an address field for second mailing (311 R) in the area of the second section and is thus visible at the outer surface of the envelope when closed for the second mailing (311 R).

2. The envelope of claim 1, wherein the second fold line divides the closing flap approximately at a ratio of 1:1.

3. The envelope of claim 1 or 2, wherein, when the envelope is sealed by means of the second adhesive strip, the closing flap extends almost over the entire height of the bottom flap.

4. The envelope of one of claims 1 to 3, further comprising a second adhesive strip (309) on the second section, fixing the closing flap on the open envelope such that the first section comes to lie upon the second section and the second section comes to lie upon the back part.

5. The envelope of one of claims 1 to 4, wherein, when the second section is reversed towards the first section along the second fold line, there is further provided for the simultaneous imprinting at least one area for imprinting at least one data field (316) on the bottom flap, and wherein the data field contains information on the envelope content to be mailed.

## Revendications

1. Enveloppe d'expédition postale utilisable au moins deux fois, constituée d'une découpe analogue à une feuille ayant une face arrière (301), au moins une languette latérale reliée à la face arrière (303L, 303R), un rabat de fond (302) relié à la face arrière et un rabat de fermeture (307) relié à la face arrière,
une première ligne de pliage (306) étant située à la transition entre la face arrière et le rabat de fermeture,
le rabat de fermeture étant divisé en une première partie (307A) et une seconde partie (3071) par une seconde ligne de pliage (317) s'étendant parallèle à la première ligne de pliage,
la première partie étant située entre les première et seconde lignes de pliage et
l'enveloppe comportant une première bande adhésive (318) sur la face extérieure du rabat de fond (302) et une seconde bande adhésive (309) sur la face intérieure du rabat de fermeture (307) dans la zone de la seconde partie,
l'enveloppe pouvant être pliée pour la première expédition de telle sorte que la première partie du rabat de fermeture peut être pliée sur la seconde partie du rabat de fermeture au niveau de la seconde ligne de pliage et est maintenue dans cet état sur la première partie à l'aide de la seconde bande adhésive (309),
et le rabat de fermeture peut ensuite être replié sur le rabat de fond (302) le long de la première ligne de pliage, la première bande adhésive (318) étant amenée loin dans la zone supérieure du rabat de fermeture (302) de sorte qu'elle colle le rabat de fermeture replié sur celle-ci avec le rabat de fond,
et dans laquelle est prévu un champ d'adresse d'expédition (311H) dans la zone inférieure du rabat de fond, ledit champ restant visible dans cet état,
et l'enveloppe pouvant être pliée pour la seconde expédition de telle sorte que le rabat de fermeture (307) peut être replié sur le rabat de fond au niveau de la première ligne de pliage à l'état déplié des première et seconde parties de sorte qu'il recouvre, dans cet état, le champ d'adresse d'expédition (311H) et peut être collé avec le rabat de fond (302) au moyen de la seconde bande adhésive (309),
dans laquelle un champ d'adresse de retour (311R) est situé sur la face extérieure du rabat de fermeture (307) dans la zone de la seconde partie, ledit champ étant situé, dans cet état, à l'extérieur de l'enveloppe fermée pour le retour et étant visible.

2. Enveloppe selon la revendication 1, dans laquelle la seconde ligne de pliage divise le rabat de fermeture dans un rapport d'environ 1:1.

3. Enveloppe selon la revendication 1 ou 2, dans laquelle le rabat de fermeture s'étend pratiquement sur la hauteur complète du rabat de fond lorsque l'enveloppe est fermée au moyen de la seconde bande adhésive.

4. Enveloppe selon l'une des revendications 1 à 3, comportant en outre une seconde bande adhésive (309) sur la seconde partie, ladite seconde bande adhésive fixant le rabat de fermeture sur l'enveloppe ouverte de telle sorte que la première partie vient reposer sur la seconde partie et la seconde partie sur la face arrière.

5. Enveloppe selon l'une des revendications 1 à 4, dans laquelle, lorsque la seconde partie est rabattue en direction de la première partie le long de la seconde ligne de pliage, l'impression simultanée d'une surface est au moins également prévue pour imprimer au moins un champ de données (316) sur le rabat de fond, et dans laquelle le champ de données contient des informations concernant le contenu de l'enveloppe à expédier.
